# EUROPÄISCHE PATENTSCHRIFT

(11) **EP 1 421 160 B1**
(45) Veröffentlichungstag und Bekanntmachung des Hinweises auf die Patenterteilung: **15.02.2006**
(21) Anmeldenummer: 02779282.9
(22) Anmeldetag: 29.08.2002
(51) Int. Cl.: C10M 171/00

(54) **VERWENDUNG VON FLUORESZENZFARBSTOFFEN AUF BASIS VON PYRROMETHENDIFLUOROBORAT-KOMPLEXEN ZUR FLUORESZENZMARKIERUNG VON SCHMIERSTOFFEN UND ZUR FESTSTELLUNG VON LECKAGE IN SCHMIERSTOFF-SYSTEMEN SOWIE EIN DEMGEMÄSSES FLUORESZENZFARBSTOFF-KONZENTRAT**
USE OF FLUORESCENT DYES BASED ON PYRRHOMETHENE DIFLUOROBORATE COMPLEXES FOR THE FLUORESCENT MARKING OF LUBRICANTS AND FOR THE DETERMINATION OF LEAKAGES IN LUBRICANT SYSTEMS AND A CORRESPONDING FLUORESCENT DYE CONCENTRATE
UTILISATION DE COLORANTS FLUORESCENTS A BASE DE COMPLEXES DE DIFLUOROBORATE DE PYRROMETHYLENE POUR REPERER PAR FLUORESCENCE DES LUBRIFIANTS ET POUR CONSTATER UNE FUITE DANS DES SYSTEMES A LUBRIFIANTS AINSI QU'UN CONCENTRE DE COLORANTS FLUORESCENTS CORRESPONDANT

(30) Priorität: 30.08.2001 DE 10142121
(43) Veröffentlichungstag der Anmeldung: 26.05.2004
(73) Patentinhaber: Certus Dur GmbH, 57258 (DE)
(72) Erfinder: ZANDER, Christoph, 57258 Freudenberg (DE); ZANDER, Birgitt, 57258 Freudenberg (DE); PÜSCHL, René, 58511 Lüdenscheid (DE)
(74) Vertreter: Köllner, Malte
(86) Internationale Anmeldenummer: PCT/EP2002/009655
(87) Internationale Veröffentlichungsnummer: WO 2003/020857

(56) Entgegenhaltungen:
- US-A- 4 278 444
- COSTELA A ET AL: "EFFICIENT AND STABLE DYE LASER ACTION FROM MODIFIED DIPYRROMETHENE BF2 COMPLEXES" APPLIED PHYSICS LETTERS, AMERICAN INSTITUTE OF PHYSICS. NEW YORK, US, Bd. 79, Nr. 3, 16. Juli 2001 (2001-07-16), Seiten 305-307, XP001078122 ISSN: 0003-6951

## Beschreibung

Die vorliegende Erfindung betrifft die Verwendung von Fluoreszenzfarbstoffen auf Basis von Pyrromethendifluoroborat-Komplexen zur Fluoreszenzmarkierung von Schmierstoffen und zur Feststellung von Leckage in Schmierstoff-Systemen sowie ein demgemäßes Fluoreszenzfarbstoff-Konzentrat.

In verschiedensten technischen Anlagen und Anwendungsbereichen, z. B. in Hydraulik-Systemen, in Flugzeugtriebwerken, im Automotiv-Bereich, ist es besonders wichtig Undichtigkeiten und Leckagen frühzeitig zu erkennen. Hierdurch können unter anderem Maschinenausfälle, Wartungs- und Reparaturaufwand minimiert werden. Zusätzlich kann hierdurch die Betriebssicherheit der Systeme erhöht werden um z. B. Personen- oder Umweltschäden zu vermeiden.

Zur Feststellung einer Leckage an einem Schmierstoffsystem können unterschiedliche Verfahren herangezogen werden. Zu den höchstsensitiven Verfahren gehören die optischen Lokalisierungen der Leckage. Durch die Markierung der in den entsprechenden Anlagen vorhandenen Schmierstoffe mit Fluoreszenzfarbstoffen lässt sich das Auffinden einer Leckage in einem Schmierstoffsystem optimieren. Im Falle einer Undichtigkeit tritt dann, neben dem Schmiermittel, auch Fluoreszenzfarbstoff aus. Durch die Anregung des austretenden Fluoreszenzfarbstoffs mit Licht (z. B. einer UV- oder Schwarzlichtlampe) kann auf der Oberfläche die Fluoreszenz des Farbstoffs beobachtet werden.

Um den Aufwand der Markierung des Schmierstoffs in der entsprechenden Anlage so gering wie möglich zu halten, ist es erforderlich, dass der fluoreszierende Farbstoff in Form eines flüssigen Fluoreszenzfarbstoff-Konzentrats, am vorteilhaftesten auf Ölbasis, zur Verfügung steht. In diesem Fall kann das Fluoreszenzfarbstoff-Konzentrat dem Schmierstoffsystem der entsprechenden Anlage zugegeben werden und vermischt sich dort mit dem Schmierstoff. Um möglichst wenig des Fluoreszenzfarbstoff-Konzentrats in das Schmierstoffsystem einbringen zu müssen, sollte das Fluoreszenzfarbstoff-Konzentrat mit dem Farbstoff so hoch konzentriert sein wie irgend möglich.

Bis zum heutigen Zeitpunkt wurden eine Vielzahl von Fluoreszenzfarbstoffen, wie z. B. Rhodamine, Oxazine oder Cumarine, entwickelt, die eine hohe Fluoreszenzquantenausbeute besitzen und sich mit einer UV-Lampe anregen lassen. Diese Farbstoffe sind jedoch nicht besonders gut öllöslich. In der Regel können ca. 2 Gramm von diesen Farbstoffen in einem Liter Öl gelöst werden. Um die Fluoreszenz dieser Farbstoffe bei einer UV-Anregung mit bloßen Augen gut erkennen zu können, ist eine Konzentration dieser Farbstoffe von ca. 0,2 Gramm pro Liter Öl erforderlich. Aus diesem Grund lassen sich mit diesen Farbstoffen nur Fluoreszenzfarbstoff-Konzentrate herstellen, die ein Verhältnis von Fluoreszenzfarbstoff-Konzentrat zu Schmierstoff von eins zu zehn zulassen.

Bei dem 1981 eingereichten U.S. Patent (4,278,444) der Firma Mobil Oil Corporation wird das Farbstoffkonzentrat "Color No. 131 Super Concentrate" der Firma Morton Chemical Company verwendet. Dieses Fluoreszenzfarbstoff-Konzentrat besteht aus dem Fluoreszenzfarbstoff "Fluorescent Yellow" und dem Lösungsmittel Petroleum. Dieses flüssige Fluoreszenzfarbstoff-Konzentrat zeigt, bei einer Anregung mit einer UV-Lampe, noch eine gut erkennbare Fluoreszenz bis zu einem Verdünnungsverhältnis von Fluoreszenzfarbstoff-Konzentrat zu Schmierstoff von eins zu tausend.

Aufgrund der Sicherheitsbestimmungen haben sich zum Einfärben von Schmierstoffen mit Fluoreszenzfarbstoff-Konzentraten in der Praxis Lösemittel bewährt, die der Verordnung über brennbare Flüssigkeiten (VbF) AIII entsprechen. Das Lösemittel Petroleum des oben beschriebenen Konzentrats (Farbstoffkonzentrat "Color No. 131 Super Concentrate") entspricht nicht dieser Spezifikation und ist daher für eine Reihe von Einsatzgebieten ungeeignet.

Aus den oben genannten und seit langem bekannten Fluoreszenzfarbstoffen wie Rhodaminen, Oxazinen und Cumarinen lassen sich ebenfalls Fluoreszenzfarbstoff-Konzentrate herstellen, hierzu sind jedoch Lösemittel wie Ethanol oder Nitrobenzol zu verwenden. Aufgrund der oben genannten Anforderung der Verordnung über brennbare Flüssigkeiten AIII sind derartige Fluoreszenzfarbstoff-Konzentrate nicht einsetzbar. Des Weiteren scheiden Lösemittel wie Nitrobenzol, aufgrund Ihrer Giftigkeit in nahezu allen Fällen, völlig aus. So z. B. wird Nitrobenzol nach EG-Richtlinien als krebserregend, giftig und umweltgefährdend eingestuft.

Somit liegt der vorliegenden Erfindung die Aufgabe zugrunde, ein Fluoreszenzfarbstoffsystem bereitzustellen, das sich unter Berücksichtigung der Verordnung über brennbare Flüssigkeiten (VbF) AIII zum Einfärben von Schmierstoffen eignen soll, wobei das System größtmögliche Verdünnung und hohe Fluoreszenzquantenausbeute gewährleisten soll.

Diese Aufgabe wird durch die in den Ansprüchen gekennzeichneten Ausführungsformen gelöst. Insbesondere wird die Verwendung von Fluoreszenzfarbstoffen auf Basis von Pyrromethendifluoroborat-Komplexen mit der allgemeinen Formel (I) 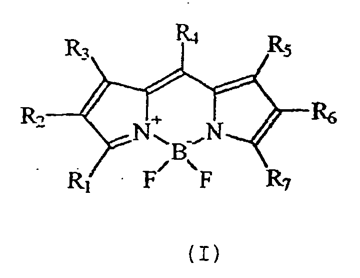
worin die Reste R₁, R₂, R₃, R₅, R₆ und R₇ unabhängig voneinander Wasserstoff oder geradkettige oder verzweigtkettige C₁-C₄₋Alkylreste, vorzugsweise Methyl, Ethyl oder Propyl, bedeuten oder die Reste R₁, R₂ bzw. R₆, R₇ Teil eines annellierten aromatischen Ringsystems sind, und der Rest R₄ einen geradkettigen oder verzweigtkettigen C₁-C₁₀-Alkylrest bedeutet,
zur Fluoreszenzmarkierung von Schmierstoffen und zur Feststellung von Leckage in Schmierstoff-Systemen bereitgestellt.

Im Rahmen der erfindungsgemäßen Verwendung werden dabei die Pyrromethendifluoroborat-Komplexe mit der allgemeinen Formel (I) vorzugsweise in Oktansäure als Lösemittel eingesetzt.

Ein weiterer Gegenstand der vorliegenden Erfindung ist somit ein Fluoreszenzfarbstoff-Konzentrat, umfassend mindestens einen Fluoreszenzfarbstoff auf Basis von Pyrromethendifluoroborat-Komplexen mit der allgemeinen Formel (I) 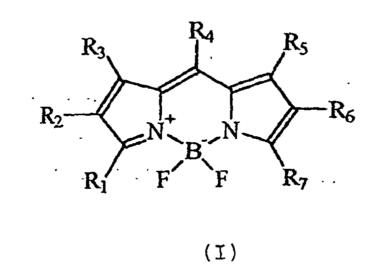
worin die Reste R₁, R₂, R₃, R₅, R₆ und R₇ unabhängig voneinander Wasserstoff oder geradkettige oder verzweigtkettige C₁-C₄₋Alkylreste, vorzugsweise Methyl, Ethyl oder Propyl, bedeuten oder die Reste R₁, R₂ bzw. R₆, R₇ Teil eines annellierten aromatischen Ringsystems sind, und der Rest R₄ einen geradkettigen oder verzweigtkettigen C₁-C₁₀-Alkylrest bedeutet, und Oktansäure als Lösemittel. Das Konzentrationsverhältnis des in der Oktansäure gelösten Fluoreszenzfarbstoffs liegt dabei in einem Bereich von etwa 150 g des Fluoreszenzfarbstoffs in 100 g Oktansäure (Minimum) bis etwa 350 g des Fluoreszenzfarbstoffs in 100 g Oktansäure (Maximum); vorzugsweise liegt es in einem Bereich von 210,8 g des Fluoreszenzfarbstoffs in 100 g Oktansäure (Minimum) bis 285,2 g des Fluoreszenzfarbstoffs in 100 g Oktansäure (Maximum). Typischerweise beträgt das Konzentrationsverhältnis 248 g des Fluoreszenzfarbstoffs in 100 g Oktansäure.

Die erfindungsgemäßen Fluoreszenzfarbstoff-Konzentrate basieren auf Oktansäure als Flüssigkeit. Diese Flüssigkeit entspricht der VbF AIII - Flammpunktspezifikation. Des Weiteren kann das erfindungsgemäße Fluoreszenzfarbstoff-Konzentrat in beliebigem Verhältnis mit Öl gemischt werden. Das Konzentrationsverhältnis des mit dem Öl gemischten Fluoreszenzfarbstoff-Konzentrats liegt dabei vorzugsweise in einem Bereich von etwa 0,1 g des Fluoreszenzfarbstoff-Konzentrats in 1 Liter Öl (Minimum) bis etwa 1 g des Fluoreszenzfarbstoff-Konzentrats in 1 Liter Öl (Maximum), insbesondere in einem Bereich von 0,238 g des Fluoreszenzfarbstoff-Konzentrats in 1 Liter Öl (Minimum) bis 0,322 g des Fluoreszenzfarbstoff-Konzentrats in 1 Liter Öl (Maximum). Typischerweise beträgt das Konzentrationsverhältnis 0,28 g des Fluoreszenzfarbstoff-Konzentrats in 1 Liter Öl. Damit ergibt sich insbesondere eine Konzentration von 0,17 g des Fluoreszenzfarbstoffs in 1 Liter Öl (Minimum) bis 0,23 g des Fluoreszenzfarbstoffs in 1 Liter Öl (Maximum). Typischerweise beträgt das Konzentrationsverhältnis 0,2 g des Fluoreszenzfarbstoffs in 1 Liter Öl.

Aus diesem Grund lassen sich mit diesem Fluoreszenzfarbstoff-Konzentrat Fluoreszenzfarbstoff-Konzentrate auf Ölbasis herstellen. Zudem stellt diese Flüssigkeit (Oktansäure) selbst kein Lösemittel dar und kann auch in lösemittelkritischen Anwendungen eingesetzt werden. Das erfindungsgemäße Fluoreszenzfarbstoff-Konzentrat zeigt in besonders vorteilhafter Weise bei einer Anregung mit einer UV-Lampe noch eine mit dem Auge gut erkennbare Fluoreszenz, und zwar bis zu einem Verdünnungsverhältnis von Fluoreszenzfarbstoff-Konzentraten zu Schmierstoff von eins zu zweitausend. Damit ist es möglich, die Menge des in das Schmierstoff-System einzubringenden Fluoreszenzfarbstoff-Konzentrats deutlich zu verringern.

Die Gruppe der Pyrromethen-Farbstoffe besitzt eine hohe Fluoreszenzquantenausbeute (> 80 %).

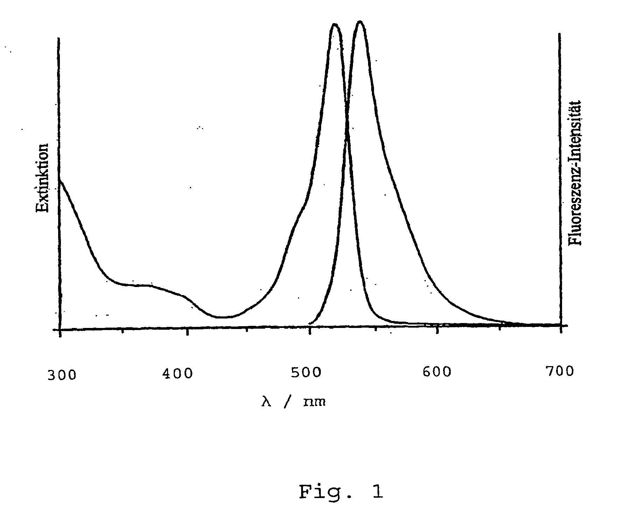

Fig. 1 zeigt das Absorptions- und Fluoreszenzspektrum des Pyrromethen-Farbstoffs 4,4-Difluor-2,6-diethyl-1,3,5,7-tetramethyl-8-heptyl-4-bora-3a, 4a-diaza-s-indacen in Ethanol. Auf der x-Achse ist die Wellenlänge λ in nm aufgetragen; auf der rechten Y-Achse die Absorption oder Extinktion, zu der der rechte Graph gehört, und auf der linken Y-Achse die Emission oder Fluoreszenzintensität, zu der der linke Graph gehört.

Die Absorptionsmaxima der erfindungsgemäß verwendeten Pyrromethen-Fluoreszenzfarbstoffe liegen im Wellenlängenbereich von 390 bis 525 nm, die Fluoreszensmaxima liegen im Wellenlängenbereich von 427 bis 545 nm. Aufgrund einer breiten Absorptionsbande im ultravioletten Spektralbereich (siehe Fig. 1), lassen sich diese Farbstoffe besonders gut mit Schwarzlichtlampen (Wellenlänge - 366 nm) zur Fluoreszenz anregen. Bedingt durch die starke Fluoreszenz können diese Farbstoffe auch bei erheblicher Verunreinigung der Öle und Fette eingesetzt werden. Die Fluoreszenz des erfindungsgemäß verwendeten Pyrromethen-Fluoreszenzfarbstoffs ist so hoch, dass diese selbst bei einer 2000fachen Verdünnung des Fluoreszenzfarbstoff-Konzentrats mit Öl bei einer Anregung mit einer handelsüblichen Schwarzlichtlampe noch gut mit dem bloßen Auge beobachtet werden kann.

Die in Formel (I) angeführten Reste R₁, R₂, R₃, R₅, R₆ und R₇ können unabhängig Wasserstoff oder geradkettige oder verzweigtkettige C₁-C₄-Alkylreste, vorzugsweise Methyl, Ethyl oder Propyl, bedeuten oder die Reste R₁, R₂ bzw. R₆, R₇ können Teil eines annellierten aromatischen Ringsystems, beispielsweise ein annellierter Benzolring, sein. Der Rest R₄ bedeutet einen geradkettigen oder verzweigtkettigen C₁-C₁₀-Alkylrest, vorzugsweise n-Butyl, n-Pentyl, n-Hexyl, oder n-Heptyl.

Im Folgenden wird die Herstellung eines erfindungsgemäßen Fluoreszenzfarbstoff-Konzentrats am Beispiel von 4,4-Difluor-2,6-diethyl-1,3,5,7-tetramethyl-8-heptyl-4-bora-3a,4a-diaza-s-indacen in Oktansäure beschrieben.

In eine Lösung von 50,0 g (0,41 mol) 2,4-Dimethyl-3-ethylpyrrol in 410 m1 Methylenchlorid werden unter Rühren bei Raumtemperatur innerhalb von 30 Minuten tropfenweise 100 g (0,62 mol) Oktansäurechlorid zugeführt. Die Reaktionsmischung wird für 60 Minuten unter Rückfluss (40°C) erhitzt. Die abgekühlte Mischung wird mit 3500 ml n-Pentan versetzt und über 15 Stunden verrührt. Das Lösungsmittelgemisch Methylenchlorid / n-Pentan wird am Rotationsverdampfer abdestilliert. Es bleibt ein dunkelrotes zähflüssiges Gemisch zurück. Durch Zugabe von 1700 ml Toluol wird daraus eine Suspension hergestellt. Unter Rühren bei Raumtemperatur werden langsam 41 ml (0,30 mol) Triethylamin zugeführt. Das Reaktionsgemisch wird für weitere 15 Minuten gerührt. Unter weiterem Rühren werden tropfenweise 145 ml (1,15 mol) Bortrifluorid-Diethylether-Komplex zugegeben. Unter UV-Licht kann eine grüne Fluoreszenz beobachtet werden. Das Gemisch wird unter Rühren für 15 Minuten auf 80°C erhitzt, danach wird es auf 40°C abgekühlt und mit insgesamt 2000 ml warmen Wasser ausgeschüttelt. Hierdurch wird das nicht umgesetzte Oktansäurechlorid in Oktansäure überführt. Des Weiteren werden wasserlösliche Verunreinigungen in die wässrige Phase eingetragen. Die organische Phase wird für 18 Stunden über Magnesiumsulfat (wasserfrei) getrocknet. Nach Abfiltrieren des Magnesiumsulfats wird das Lösungsmittelgemisch bestehend aus Toluol, Triethylamin und unverbrauchtem Bortrifluorid-Diethylether-Komplex am Rotationsverdampfer abdestilliert. Es wird ein dunkelroter zähflüssiger Rückstand erhalten. Die Isolierung (Reinigung) des Farbstoffes kann durch Säulenchromatographie (Chloroform / Kieselgel) erfolgen. Zur Herstellung des Fluoreszenzfarbstoff-Konzentrats wird der gereinigte Farbstoff in hoher Konzentration in Oktansäure gelöst. Das Konzentrationsverhältnis des in der Oktansäure gelösten Fluoreszenzfarbstoffs liegt dabei in einem Bereich von etwa 150 g des Fluoreszenzfarbstoffs in 100 g Oktansäure (Minimum) bis etwa 350 g des Fluoreszenzfarbstoffs in 100 g Oktansäure (Maximum); vorzugsweise liegt es in einem Bereich von 210,8 g des Fluoreszenzfarbstoffs in 100 g Oktansäure (Minimum) bis 285,2 g des Fluoreszenzfarbstoffs in 100 g Oktansäure (Maximum). Typischerweise beträgt das Konzentrationsverhältnis 248 g des Fluoreszenzfarbstoffs in 100 g Oktansäure.

## Patentansprüche

1. Verwendung von Fluoreszenzfarbstoffen auf Basis von Pyrromethendifluoroborat-Komplexen mit der allgemeinen Formel (I) 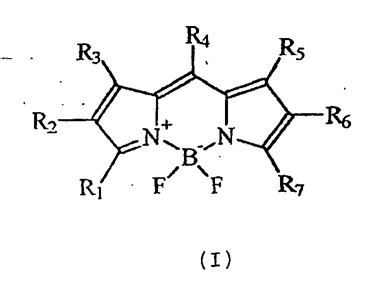
worin die Reste R₁, R₂, R₃, R₅, R₆ und R₇ unabhängig voneinander Wasserstoff oder geradkettige oder verzweigtkettige C₁-C₄₋Alkylreste bedeuten oder die Reste R₁, R₂ bzw. R₆, R₇ Teil eines annellierten aromatischen Ringsystems sind, und der Rest R₄ einen geradkettigen oder verzweigtkettigen C₁-C₁₀-Alkylrest bedeutet,
zur Fluoreszenzmarkierung von Schmierstoffen und zur Feststellung von Leckage in Schmierstoff-Systemen.

2. Verwendung nach Anspruch 1, wobei der Fluoreszenzfarbstoff auf Basis von Pyrromethendifluoroborat-Komplexen mit der allgemeinen Formel (I) in Oktansäure gelöst ist.

3. Verwendung nach Anspruch 1 oder 2, wobei der Fluoreszenzfarbstoff auf Basis von Pyrromethendifluoroborat-Komplexen mit der allgemeinen Formel (I) 4,4-Difluor-2,6-diethyl-1,3,5,7-tetramethyl-8-heptyl-4-bora-3a, 4a-diaza-s-indacen gewählt wird.

4. Fluoreszenzfarbstoff-Konzentrat, umfassend mindestens einen Fluoreszenzfarbstoff auf Basis von Pyrromethendifluoroborat-Komplexen mit der allgemeinen Formel (I) 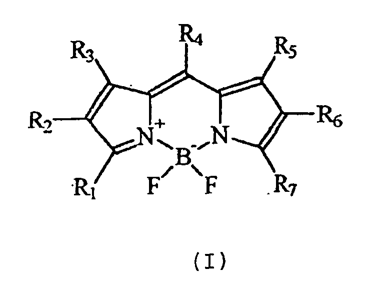
worin die Reste R₁, R₂, R₃, R₅, R₆ und R₇ unabhängig voneinander Wasserstoff oder geradkettige oder verzweigtkettige C₁-C₄₋Alkylreste bedeuten oder die Reste R₁, R₂ bzw. R₆, R₇ Teil eines annellierten aromatischen Ringsystems sind, und der Rest R₄ einen geradkettigen oder verzweigtkettigen C₁-C₁₀-Alkylrest bedeutet, und Oktansäure als Lösemittel.

5. Fluoreszenzfarbstoff-Konzentrat nach Anspruch 4, wobei das Konzentrationsverhältnis des in der Oktansäure gelösten Fluoreszenzfarbstoffs in einem Bereich von 150 g des Fluoreszenzfarbstoffs in 100 g Oktansäure (Minimum) bis 350 g des Fluoreszenzfarbstoffs in 100 g Oktansäure (Maximum) liegt.

6. Fluoreszenzfarbstoff-Konzentrat nach Anspruch 4 oder 5, wobei der Fluoreszenzfarbstoff auf Basis von Pyrromethendifluoroborat-Komplexen mit der allgemeinen Formel (I) 4,4-Difluor-2,6-diethyl-1,3,5,7-tetramethyl-8-heptyl-4-bora-3a, 4a-diaza-s-indacen gewählt wird.

## Claims

1. Use of fluorescent dyes based on pyrromethene difluoroborate complexes having the general formula (I) 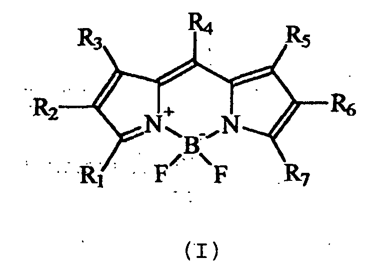
where R₁, R₂, R₃, R₅, R₆ and R₇ are independently hydrogen or straight-chain.or branched-chain C₁-C₄-alkyl radicals or the R₁ and R₂ and the R₆ and R₇ pairs are part of a fused aromatic ring system and R₄ is a straight-chain or branched-chain C₁-C₁₀-alkyl radical, for fluorescent marking of lubricants and for detecting leakage in lubricant systems.

2. Use according to claim 1, **characterized in that** the fluorescent dye based in pyrromethene difluoroborate complexes having the general formula (I) has been dissolved in octanoic acid.

3. Use according to claim 1 or 2, **characterized in that** the fluorescent dye based on pyrromethene difluoroborate complexes having the general formula (I) 4,4-difluoro-2,6-diethyl-1,3,5,7-tetramethyl-8-heptyl-4-bora-3a,4a-diaza-s-indacene is selected.

4. A fluorescent dye concentrate comprising at least one fluorescent dye based on pyrromethene difluoroborate complexes having the general formula (I) 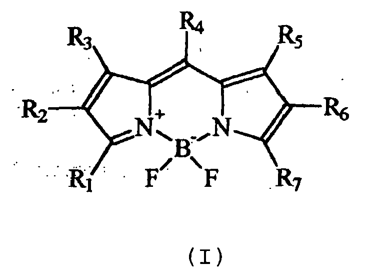
where R₁, R₂, R₃, R₅, R₆ and R₇ are independently hydrogen or straight-chain or branched-chain C₁-C₄-alkyl radicals or the R₁ and R₂ and the R₆ and R₇ pairs are part of a fused aromatic ring system and R₄ is a straight-chain or branched-chain C₁-C₁₀ alkyl radical, and octanoic acid solvent.

5. A fluorescent dye concentrate according to claim 4, **characterized in that** the concentration ratio of the fluorescent dye dissolved in octanoic acid is in the range from 150 g of the fluorescent dye in 100 g of octanoic acid (minimum) to 350 g of the fluorescent dye in 100 g of octanoic acid (maximum).

6. A fluorescent dye concentrate according to claim 4 or 5, **characterized in that** the fluorescent dye based on pyrromethene difluoroborate complexes having the general formula (I) 4,4-difluoro-2,6-diethyl-1,3,5,7-tetramethyl-8-heptyl-4-bora-3a,4a-diaza-s-indacene is selected.

## Revendications

1. Utilisation de colorants fluorescents à base de complexes de difluoroborate de pyrrométhène de formule générale (I) 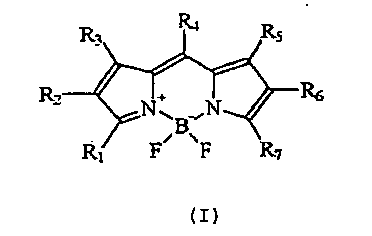
dans laquelle les radicaux R₁, R₂, R₃, R₅, R₆ et R₇ représentent, indépendamment les uns des autres, un hydrogène ou des radicaux alkyle en C₁-C₄ à chaîne linéaire ou à chaîne ramifiée, ou les radicaux R₁, R₂ ou R₆, R₇ constituent une partie d'un système de noyaux aromatiques condensés et le radical R₄ représente un radical alkyle en C₁-C₁₀ à chaîne linéaire ou à chaîne ramifiée,
pour le marquage fluorescent de lubrifiants et pour la détermination d'une fuite dans des systèmes à lubrifiants.

2. Utilisation selon la revendication 1, dans laquelle le colorant fluorescent à base de complexes de difluoroborate de pyrrométhène de formule générale (I) est dissouts dans de l'acide octanoïque.

3. Utilisation selon la revendication 1 ou 2, dans laquelle le colorant fluorescent à base de complexes de difluoroborate de pyrrométhène de formule générale (I) est choisi comme le 4,4-difluoro-2,6-diéthyl-1,3,5,7-tétraméthyl-8-heptyl-4-boroat-3a, 4a-diaza-s-indacène.

4. Concentré de colorant fluorescent, comprenant au moins un colorant fluorescent à base de complexes de difluoroborate de pyrrométhène de formule générale (I) 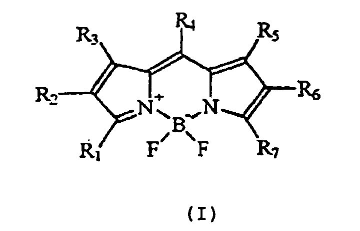
dans laquelle les radicaux R₁, R₂, R₃, R₅, R₆ et R₇ représentent indépendamment les uns des autres, un hydrogène ou des radicaux alkyle en C₁-C₄ à chaîne linéaire ou à chaîne ramifiée, ou les radicaux R₁, R₂ ou R₆, R₇ constituent une partie d'un système de noyaux aromatiques condensés, et le radical R₄ représente un radical alkyle en C₁-C₁₀ à chaîne linéaire ou à chaîne ramifiée, et de l'acide octanoïque en tant que solvant.

5. Concentré de colorant fluorescent selon la revendication 4, dans lequel le rapport de concentration du colorant fluorescent dissous dans l'acide octanoïque est dans la plage de 150 g du colorant fluorescent dans 100 g d'acide octanoïque (minimum) à 350 g du colorant fluorescent dans 100 g d'acide octanoïque (maximum).

6. Concentré de colorant fluorescent selon la revendication 4 ou 5, dans lequel le colorant fluorescent à base de complexes de difluoroborate de pyrrométhène de formule générale (I) est choisi comme le 4,4-difluoro-2,6-diéthyl-1,3,5,7-tétraméthyl-8-heptyl-4-boroat-3a, 4a-diaza-s-indacène.
